(19) Europäisches Patentamt
European Patent Office
Office européen des brevets

(11) EP 3 699 672 A1

(12) EUROPEAN PATENT APPLICATION
published in accordance with Art. 153(4) EPC

(43) Date of publication:
26.08.2020 Bulletin 2020/35

(51) Int Cl.:
G02B 27/02 (2006.01)    G02B 5/04 (2006.01)

(21) Application number: 18867855.1

(22) Date of filing: 28.09.2018

(86) International application number:
PCT/JP2018/036485

(87) International publication number:
WO 2019/077975 (25.04.2019 Gazette 2019/17)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.10.2017 JP 2017200387

(71) Applicant: Konica Minolta, Inc.
Tokyo 100-7015 (JP)

(72) Inventor: MARUI Keita
Tokyo 100-7015 (JP)

(74) Representative: MFG Patentanwälte
Meyer-Wildhagen Meggle-Freund
Gerhard PartG mbB
Amalienstraße 62
80799 München (DE)

(54) **VIDEO DISPLAY DEVICE AND OPTICAL SEE-THROUGH DISPLAY**

(57) A video display device of an optical see-through type includes: a display element that displays a video; a combiner that simultaneously guides, to an observer's eye, video light from the display element and external light from an outside view; a prism that supports the combiner; and a correction optical element that is disposed to satisfy the following conditional expression: $(\Delta Y/Y1) \times 100 \leq 25\%$ ($\Delta Y$ is an absolute value of a difference between Y1 and Y2, $\Delta Y = |Y1 - Y2|$, Y1 is a stimulus value of a ray of light that passes through the prism and the combiner without passing through the correction optical element in the external light that perpendicularly enters a prism surface, and Y2 is a stimulus value of a ray of light that passes through the prism and the correction optical element without passing through the combiner in the external light that obliquely enters the prism surface).

FIG. 2

**Description**

Technical Field

The present invention relates to a video display device and an optical see-through display, and relates to, for example, an optical see-through type video display device that projects and displays a two-dimensional video of a liquid crystal display element on an observer's eye by using a combiner (a half mirror, a hologram optical element, or the like), and an optical see-through display (a head-mounted display or the like) that includes the video display device.

Background Art

A video display device is conventionally known that is mounted with a combiner in order to conduct a see-through display of a video. For example, Patent Literature 1 has proposed a head-mounted display that is capable of displaying a video having high visibility to a user even in a case where brightness around a direction of a line of sight of the user is different from brightness in another area. The head-mounted display includes a light control filter that controls the brightness of external light, and a camera that images the pupil. The head-mounted display is configured to improve the visibility of video light by determining the transmittance of the light control filter and the intensity of the video light on the basis of a pupil diameter.
Patent Literature 2 has proposed a head-mounted display in which the transmittance of a range of video light has been made different from the transmittance of the other range by using a liquid crystal shutter in order to make it easy to visually recognize a virtual image superimposed onto an image of an outside world. In addition, Patent Literature 3 has proposed a head-mounted display in which a lens is provided with a light reducing part that reduces external light in order to improve the visibility of an image.

Citation List

Patent Literature

Patent Literature 1: JP 2017-97098 A
Patent Literature 2: JP 2013-214856 A
Patent Literature 3: JP 2008-46562 A

Summary of Invention

Technical Problem

In the head-mounted displays described in Patent Literatures 1 to 3, the visibility of a video is improved, but the visibility of an outside world is not improved. Stated another way, the visibility of a video is improved. However, a field of view that is observed through a combiner (a half mirror or the like) of an outside world viewed from a wearer looks dark, the other field of view looks bright, and an entire field of view looks non-uniform. This is remarkable when video light is not emitted. Therefore, in a state where a video is not displayed, the brightness or color of the outside world becomes non-uniform, and it is difficult to view the outside world. For example, in the case of the head-mounted display described in Patent Literature 1, only a field of view that is viewed through both a half mirror and the light control filter is dark. Similarly, in the cases of the head-mounted displays described in Patent Literatures 2 and 3, brightness in a field of view is non-uniform.
The present invention has been made in view of such a situation, and it is an object of the present invention to provide a video display device in which the non-uniformity of an external field of view due to a combiner has been reduced, and an optical see-through display including the video display device.

Solution to Problem

In order to achieve the object described above, a video display device according to the present invention is a video display device of an optical see-through type that projects and displays a video on an observer's eye in a state where the video has been superimposed onto an outside view. The video display device includes: a display element that displays the video; a combiner that simultaneously guides, to the observer's eye, video light from the display element and external light from the outside view; a prism that supports the combiner; and a correction optical element that is disposed to satisfy Conditional Expression (1) described below:

$$(\Delta Y / Y1) \times 100 \leq 25\% ... (1),$$

where

$\Delta Y$ is an absolute value of a difference between Y1 and Y2,

$$\Delta Y = |Y1 - Y2|,$$

Y1 is a stimulus value of a ray of light that passes through the prism and the combiner without passing through the correction optical element in the external light that perpendicularly enters a prism surface, and
Y2 is a stimulus value of a ray of light that passes through the prism and the correction optical element without passing through the combiner in the external light that obliquely enters the prism surface.

The video display device according to the present invention is a video display device of an optical see-through type that projects and displays a video on an observer's eye in a state where the video has been superimposed onto an outside view. The video display device includes: a display element that displays the video; a combiner that simultaneously guides, to the observer's eye, video light from the display element and external light from the outside view; a prism that supports the combiner; and a correction optical element that is disposed to satisfy Conditional Expression (2) described below:

$$\Delta E \leq 6.5 ... (2),$$

where
$\Delta E$ is a color difference between a ray of light that passes through the prism and the combiner without passing through the correction optical element in the external light that perpendicularly enters a prism surface and a ray of light that passes through the prism and the correction optical element without passing through the combiner in the external light that obliquely enters the prism surface.

The video display device according to the present invention is a video display device of an optical see-through type that projects and displays a video on an observer's eye in a state where the video has been superimposed onto an outside view. The video display device includes: a display element that displays the video; a combiner that simultaneously guides, to the observer's eye, video light from the display element and external light from the outside view; a prism that supports the combiner; and a correction optical element that is disposed in a state where a projection viewed from the observer's eye of the correction optical element and a projection of the combiner do not overlap each other and do not have a gap. A transmittance of the external light in the combiner is equal to a transmittance of the external light in the correction optical element.

An optical see-through display according to the present invention is mounted with the video display device according to the present invention, so that the optical see-through display has a function of projecting and displaying the video on the observer's eye in a see-through manner by using the combiner.

Advantageous Effects of Invention

According to the present invention, a video display device in which the non-uniformity of an external field of view due to a combiner has been reduced and an optical see-through display including the video display device can be achieved. For example, when an outside world is observed through a head-mounted display, the non-uniformity of the brightness or color of an external field of view is reduced. Therefore, an effect is exhibited by which a difficulty in viewing the outside world is reduced.

Brief Description of Drawings

Fig. 1 is a schematic configuration diagram illustrating an embodiment of a video display device that includes a half mirror or a hologram optical element as a correction optical element.

Fig. 2 is an optical path diagram illustrating video light and external light in the video display device of Fig. 1.

Fig. 3 is a front view illustrating a glasses type head-mounted display including the video display device of Fig. 1.

Fig. 4 is a sectional view taken along line V-V' of Fig. 3.

Fig. 5 is an optical sectional view illustrating a relationship between a combiner and a ray of light in a field of view in a video display device.

Fig. 6 is an optical sectional view for explaining an influence of the disposition of a correction optical element.

Fig. 7 is an optical sectional view for explaining a disposition pattern of a correction optical element.

Fig. 8 is a schematic diagram for explaining a projection state viewed from an observer's eye.

Fig. 9 is an optical path diagram for explaining hologram exposure and hologram reproduction.

Fig. 10 is a schematic configuration diagram illustrating an embodiment of a video display device that includes a light absorption prism as a correction optical element.

Fig. 11 is a schematic configuration diagram illustrating a general optical see-through type video display device as a comparative example.

Description of Embodiments

A video display device, an optical see-through display, and the like that embody the present invention are described below with reference to the drawings. Note that the same parts or equivalent parts in respective embodiments or the like are denoted by the same reference sings, and a duplicate description is appropriately omitted.

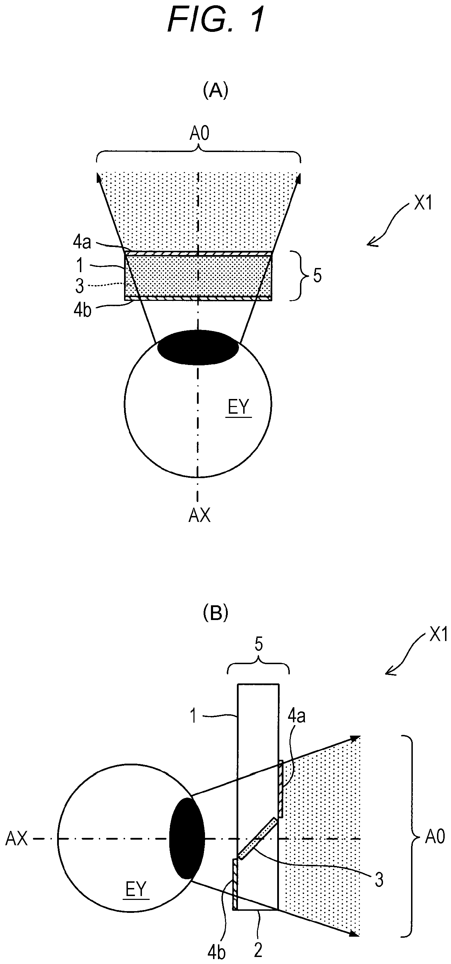

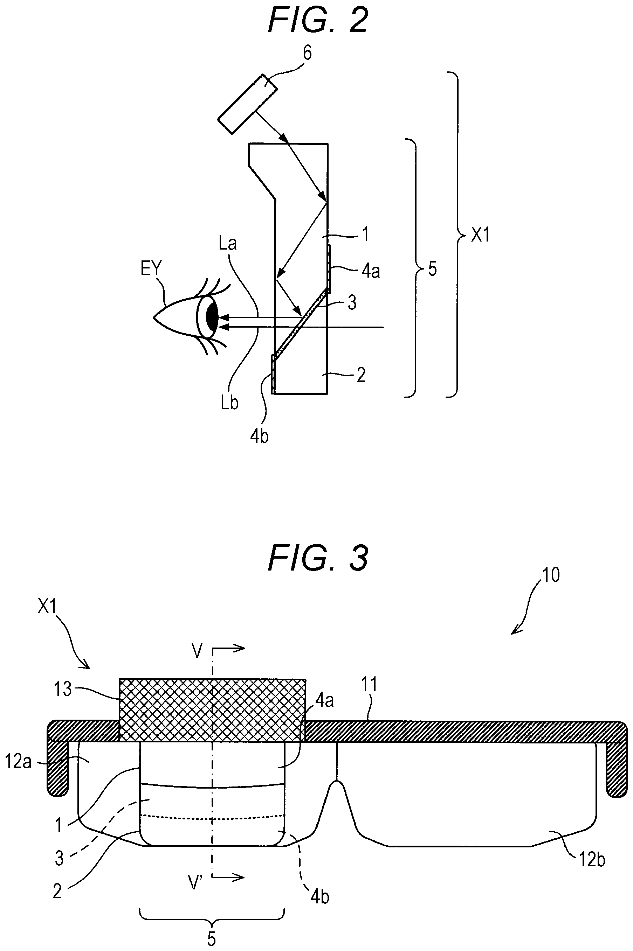

Fig. 1 illustrates a schematic configuration of a video display device X1 including correction optical elements 4a and 4b. Fig. 1(A) is a plan view illustrating a principal part of the video display device XI, and Fig. 1(B) is a longitudinal sectional view illustrating a principal part of the video display device X1. In addition, Fig. 2 illustrates respective optical paths of video light La and external light Lb in the video display device X1. As is apparent from Fig. 2, the video display device X1 is an optical see-through type video display device that projects and displays a video of a display element 6 on an observer's eye EY in such a way that the video is superimposed onto an outside view, and the video display device X1 includes an optical device 5 and the display element 6.

The display element 6 is an optical device that displays a video by emitting video light including visible light. Specific examples of the display element 6 include a reflection-type or transmission-type liquid crystal display (LCD), a digital micromirror device, an organic electro-luminescence (EL) display, and the like. Further, an illumination device that illuminates the display element 6 may be disposed. As an example, the illumination device includes an illumination optical system or the like that includes a light source such as a light emitting diode (LED) and a condensing optical element (a lens, a mirror, or the like).

The optical device 5 includes prisms 1 and 2 that are transparent and support a combiner 3, the combiner 3 that simultaneously guides, to the observer's eye EY, video light La from the display element 6 and external light Lb from the outside view, and correction optical elements 4a and 4b that optically act on the external light Lb (Fig. 2) that is made incident without passing through the combiner 3. The prisms 1 and 2 are transparent optical members that each include a transparent material such as plastic (acrylic resin, polycarbonate, cycloolefin resin, or the like). A specific example of the combiner 3 and the correction optical elements 4a and 4b is an optical element such as a half mirror (a film-shaped half mirror, a thin film-shaped half mirror, or the like) or a hologram optical element (a reflection-type hologram of a volume phase type, or the like).

The optical device 5 has a non-axisymmetric (rotationally asymmetric) positive optical power in the combiner 3. Therefore, the optical device 5 functions as an eyepiece optical system that guides, to the observer's eye EY, the video light La from the display element 6. As a result, a display video of the display element 6 is projected and displayed as a magnified virtual image on the observer's eye EY via the combiner 3 in a see-through manner in such a way that the video of the display element 6 is superimposed onto an image of an outside world. Note that the optical power of the combiner 3 can be achieved by configuring a half mirror surface or a hologram surface by using a curved surface (such as a conical surface) or by generating a hologram optical element to have optical power.

The two prisms 1 and 2 are cemented by using an adhesive (not illustrated) to sandwich the combiner 3, and form a parallel flat plate. The prism 1 internally guides video light La that has been made incident from the display element 6 by totally reflecting the video light La. On the other hand, the prism 1 acts to transmit light of the image of the outside world (external light Lb). At this time, the combiner 3 is provided on a cemented surface of the prisms 1 and 2, and therefore the see-through property of the image of the outside world via the cemented surface (a combiner function) is secured. The prism 2 is cemented with the prism 1. Therefore, refraction at a time when the external light Lb is transmitted through a wedge-shaped lower end of the prism 1 is cancelled by the prism 2, and distortion can be prevented from being generated in an image to be observed of the outside world.

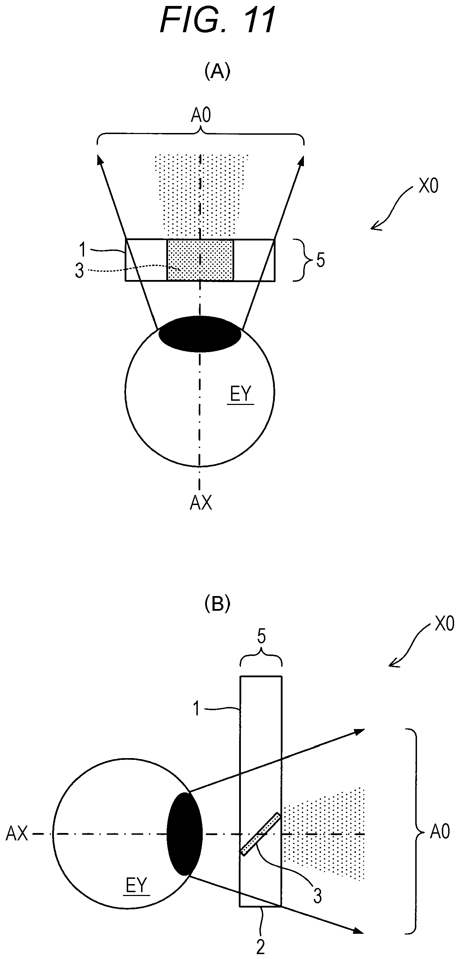

The correction optical element 4a is stuck on a prism surface on a side of the outside world of the prism 1, and the correction optical element 4b is stuck on a prism surface on a side of the observer's eye EY of the prism 2. All of the combiner 3 and the correction optical elements 4a and 4b cover an entire field of view A0 in leftward and rightward directions (Fig. 1(A)) viewed from the observer's eye EY. The entire field of view A0 in upward and downward directions (Fig. 1(B)) viewed from the observer's eye EY is covered with a combination of areas that are covered with the combiner 3 and the correction optical elements 4a and 4b in such a way that the areas do not overlap each other and do not have any gaps. Accordingly, the non-uniformity of an external field of view due to the combiner 3 is reduced by the correction optical elements 4a and 4b. Note that only part of a field of view with an optical axis AX as a center may be covered with the combiner 3 (the configuration of Fig. 11 described later), and fields of view on left-hand and right-hand sides of the covered part may also be covered with the correction optical elements 4a and 4b. However, leftward and rightward directions viewed from the observer's eye EY are directions parallel to a center axis of an inclination of the combiner 3. Thus, the fields of view on the left-hand and right-hand sides of the covered part can only be easily covered with the combiner 3.

As illustrated in Fig. 2, in a case where a half mirror is used as the combiner 3, part (for example, 50%) of video light La that has entered the combiner 3 is reflected. In a case where a hologram optical element is used as the combiner 3, when video light La enters the combiner 3 as reproduced illumination light, video light La having a specified wavelength is diffracted and reflected (hologram-reproduced) as reproduced image light. In both cases, video light La reflected by the combiner 3 enters the observer's eye EY together with external light Lb that has been transmitted through the combiner 3. Accordingly, the observer can observe the image of the outside world together with the display video. In addition, the prism 1 serving as a transparent base material is configured to totally reflect the video light La from the display element 6 inside the prism 1 and guide the video light La to the combiner 3. Therefore, video light La emitted from the display element 6 is utilized without waste, and a bright video can be provided to the observer.

As described above, the combiner 3 simultaneously guides, to the observer's eye EY, a video displayed on the display element 6 and an image of an outside world. Thus, the observer can simultaneously observe a video provided from the display element 6 and the image of the outside world via the combiner 3. Accordingly, by being mounted with the video display device X1 described above (Figs. 1 and 2), an optical see-through display can be configured that has a function of projecting and displaying a video on the observer's eye EY in a see-through manner by using the optical device 5.

As described above, it is desirable that, by being mounted with the video display device XI, an optical see-through display have a function of projecting and displaying a video on the observer's eye EY in a see-through manner by using the combiner 3. It is also desirable that the optical see-through display be a head-mounted display including a support member that supports the video display device X1 in such a way that the combiner 3 is located in front of the observer's eye EY (stated another way, a support member that supports the video display device X1 in front of the observer's eye). The video display device X1 has a high see-through property. Therefore, in disposition in which a video is displayed in front of the observer's eye, a high video display effect can be exhibited.

Examples of the optical see-through display include a head-mounted display (HMD), a head-up display (HUD), and the like. In addition, examples of a form of the head-mounted display include a glasses type, a helmet type, and the like, and examples of a purpose of the head-up display include driving an automobile, piloting an airplane, and the like. Here, a glasses type head-mounted display including the video display device X1 is described below as an example.

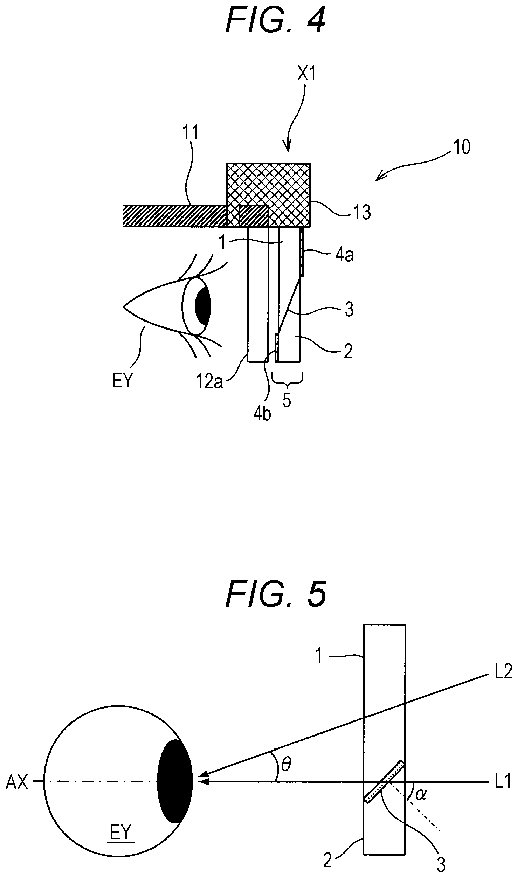

Fig. 3 illustrates a schematic configuration of a glasses type head-mounted display 10 including the video display device XI, and Fig. 4 illustrates a structure in a section taken along line V-V' of the head-mounted display 10. The head-mounted display 10 includes the video display device X1 described above, a frame (a support member) 11, lenses 12a and 12b, and a housing 13. The lenses 12a and 12b and the housing 13 are supported by the frame 11. The display element 6, an illumination device (not illustrated), and the like of the video display device X1 are housed in the housing 13, and an upper end of the optical device 5 serving as an eyepiece optical system is also located in the housing 13. Accordingly, the housing 13 is supported by the frame 11, and therefore a body part of the optical device 5 is located in front of (on a side of an outside world of) the lens 12a for the right eye (Fig. 4). Note that the lenses 12a and 12b may be lenses for glasses, or may be dummy lenses including a plane-parallel plate.

The display element 6, a light source (not illustrated), and the like in the housing 13 are connected with a circuit board (not illustrated) via a cable (not illustrated) that is provided to penetrate the housing 13, and driving power or a video signal is supplied from the circuit board to the display element 6, the light source, and the like. Note that the video display device X1 may further include an imaging device that captures a still image or a moving image, a microphone, a speaker, an earphone, or the like, and the video display device X1 may be configured to communicate (transmit or receive) information relating to a captured image and a display image or sound information with (to or from) an external server or terminal via a communication line such as the Internet.

When the head-mounted display 10 is attached to an observer's head and a video is displayed on the display element 6 (Fig. 2), video light La of the video is guided to the observer's eye EY via the optical device 5, and the observer can observe a magnified virtual image of a display video of the video display device X1. In addition, simultaneously with this, the observer can observe an image of an outside world in a see-through manner via the optical device 5. The video display device X1 is supported by the frame 11. Therefore, the observer can simultaneously and stably observe the display video provided from the video display device X1 and the image of the outside image in a hands-free state for a long time, and can perform a desired task with unused hands. Note that two video display devices X1 may be used such that a video can be observed by using both eyes.

Here, a video display device X1 in a case where both the combiner 3 and the correction optical elements 4a and 4b are half mirrors is used as Example 1, and correction of brightness using the correction optical elements 4a and 4b is described. Note that, in Example 1, an absorption type neutral density (ND) filter, instead of the half mirror, may be used as the correction optical elements 4a and 4b.

Fig. 11 illustrates a general optical see-through type video display device X0 as a comparative example. Fig. 11 illustrates a principal part of the video display device X0 similarly to Fig. 1, (A) is a plan view, and (B) is a longitudinal sectional view. As illustrated as the video display device X0 in this comparative example, in a case where the combiner 3 is disposed to only cover part of the entire field of view A0, only a field of view viewed through the combiner 3 including a half mirror looks dark. For example, in a case where a person who wears the head-mounted display 10 including the video display device X0 views an outside world in a state where a video is not displayed, an external field of view viewed through the combiner 3 in front of the eye and the other field of view look different in brightness or color, and this causes a difficulty in viewing the outside world.

In contrast, in the video display device X1 in Example 1, as illustrated in Fig. 1, the entire field of view A0 is covered with a combination of areas that are covered with the combiner 3 and the correction optical elements 4a and 4b in such a way that the areas do not overlap each other and do not have any gaps. Thus, if the correction optical element 4a that is provided on a prism surface on a side of the outside world of the prism 1 and the correction optical element 4b that is provided on a prism surface on a side of the observer's eye EY of the prism 2 are configured by a half mirror to have a transmittance or reflectance that is similar to a transmittance or reflectance of the combiner 3, the brightness of the outside world can be made uniform in a field of view viewed through the combiner 3 and a field of view viewed through the correction optical element 4a or the correction optical element 4b rather than the combiner 3. Accordingly, the non-uniformity of an external field of view due to the combiner 3 can be reduced.

Fig. 5 illustrates a relationship between the combiner 3 and rays of light L1 and L2 in a field of view. As conditions for considering the brightness of an outside world to be uniform, the ray of light L1 that passes through the prism 1 or 2 and the combiner 3 in external light Lb (Fig. 2) that perpendicularly enters a prism surface of the prism 2, and the ray of light L2 that passes through the prism 1 or 2 without passing through the combiner 3 in external light Lb that obliquely enters a prism surface of the prism 1 are considered.

It is assumed that an optical axis AX as a reference is located to be perpendicular to the prism surfaces of the prisms 1 and 2, an incident angle $\alpha$ of the ray of light L1 with respect to the combiner 3 is 30 degrees, an angle $\theta$ formed by the ray of light L2 with respect to the ray of light L1 is 10 degrees, and upper and lower field-of-view ranges $\theta$ that an observer can view without moving the head are $\pm 10$ degrees. An incident angle $\alpha$ at which the ray of light L1 of the external light Lb enters the combiner 3 is 30 degrees, and an incident angle $\theta$ at which the ray of light L2 of the external light Lb enters the correction optical element 4a or 4b is 10 degrees. Therefore, correction optical elements 4a and 4b (for example, half mirrors or ND filters) are selected that have a reflectance, a transmittance, or an absorptivity at an incident angle of 10 degrees that is roughly similar to a reflectance, a transmittance, or an absorptivity at an incident angle of 30 degrees.

Then, the correction optical elements 4a and 4b are disposed in such a way that Conditional Expression (1) described below is satisfied:

$$(\Delta Y/Y1) \times 100 \leq 25\% \, ... \, (1)$$

where

$\Delta Y$ is an absolute value of a difference between Y1 and Y2,

$$\Delta Y = |Y1 - Y2|,$$

Y1 is a stimulus value of a ray of light that passes through a prism and a combiner without passing through a correction optical element in external light that perpendicularly enters a prism surface, and
Y2 is a stimulus value of a ray of light that passes through a prism and a correction optical element without passing through the combiner in external light that obliquely enters a prism surface.

Relating to Conditional Expression (1) described above, it is desirable that Conditional Expression (1a) described below be satisfied, and it is further desirable that Conditional Expression (1b) be satisfied:

$$(\Delta Y/Y1) \times 100 \leq 15\% \ ... \ (1a)$$

$$(\Delta Y/Y1) \times 100 \leq 5\% \ ... \ (1b)$$

Conditional Expressions (1a) and (1b) described above specify condition ranges that are suitable to consider the brightness of the outside world to be uniform, within a condition range specified by Conditional Expression (1) described above. Note that an upper limit of Conditional Expression (1) corresponds to, for example, a reduction in one stage of a diaphragm of a camera, and Conditional Expression (1) described above and the like specify a level at which left and right eyes do not feel uncomfortable due to a difference in brightness.

In Conditional Expression (1), $\Delta Y$ is calculated as the absolute value $|Y1-Y2|$ of a difference between a stimulus value Y1 obtained for the ray of light L1 according to Formula (B1) described below and a stimulus value Y2 obtained for the ray of light L2 according to Formula (B 1) described below:
[Formula 1]

$$Y = K \int_{380}^{780} P(\lambda) y(\lambda) d\lambda \quad ...(B1)$$

In this formula,

$P(\lambda)$ is a spectrum of light that enters an eye,
$y(\lambda)$ is a color-matching function of y, and
K is a maximum luminosity factor (638 [lm/W]).

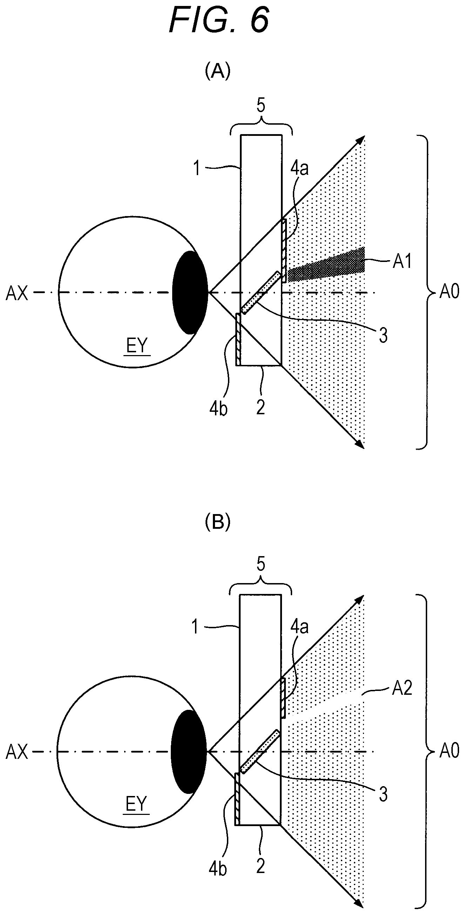

The disposition of the correction optical elements 4a and 4b is important to make an external field of view uniform. Fig. 6 illustrates an influence of the disposition of the correction optical elements 4a and 4b. If the combiner 3 and the correction optical element 4a or 4b overlap each other on a line of sight, the outside world looks dark in a dark field-of-view area A1 that corresponds to an overlapping part, as illustrated in Fig. 6(A). In addition, in a case where a part where neither the combiner 3 nor the correction optical elements 4a and 4b are present in a field of view, the outside world only looks bright in a bright field-of-view area A2 that corresponds to a gap part, as illustrated in Fig. 6(B). Accordingly, in both the dispositions illustrated in Figs. 6(A) and 6(B), the brightness of an external field of view is not uniform, and therefore it is difficult to view the outside world.

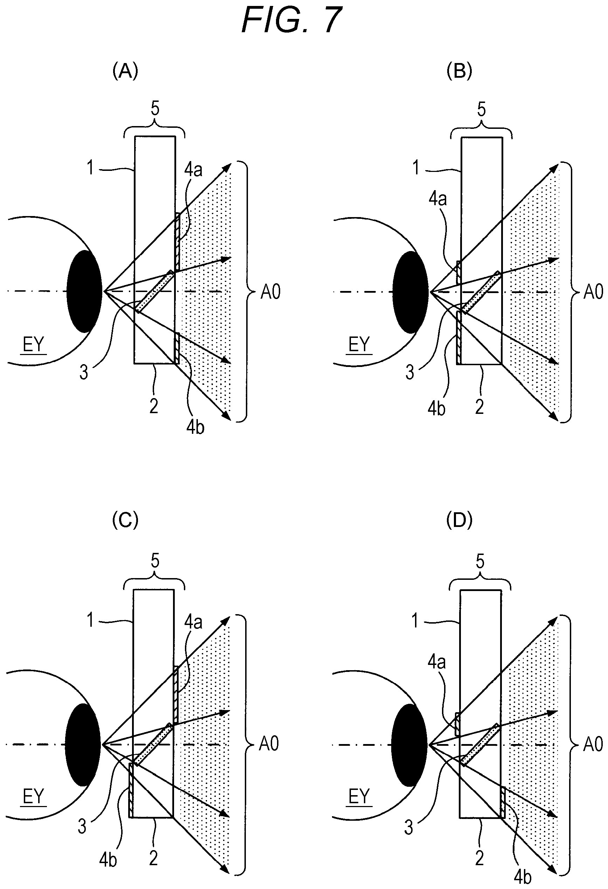

Fig. 7 illustrates a disposition pattern of the correction optical elements 4a and 4b for making an external field of view uniform. In the disposition pattern illustrated in Fig. 7(A), the correction optical elements 4a and 4b are respectively stuck on prism surfaces on a side of the outside world of the prisms 1 and 2. In the disposition pattern illustrated in Fig. 7(B), the correction optical elements 4a and 4b are respectively stuck on prism surfaces on a side of the observer's eye EY of the prisms 1 and 2. In the disposition pattern illustrated in Fig. 7(C), the correction optical element 4a is stuck on the prism surface on the side of the outside world of the prism 1, and the correction optical element 4b is stuck on the prism surface on the side of the observer's eye EY of the prism 2. In the disposition pattern illustrated in Fig. 7(D), the correction optical element 4a is stuck on the prism surface on the side of the observer's eye EY of the prism 1, and the correction optical element 4b is stuck on the prism surface on the side of the outside world of the prism 2. In all of the disposition patterns, the combiner 3 and the correction optical elements 4a and 4b are combined without a gap to not overlap each other, and the combiner 3 and the correction optical elements 4a and 4b cover the entire field of view A0. Accordingly, the brightness of the external field of view is made uniform, and this enables the outside world to be easily viewed.

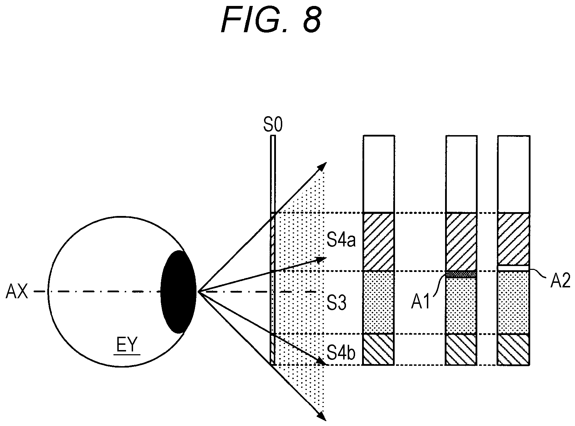

Fig. 8 illustrates projection states of the combiner 3 and the correction optical elements 4a and 4b that are viewed from the observer's eye EY. The correction optical elements 4a and 4b are disposed on a projection plane S0 in such a way that projections S4a and S4b of the correction optical elements 4a and 4b that are viewed from the observer's eye EY do not overlap projection S3 of the combiner 3 and there are no gaps among the projections S4a, S4b, and S3. In contrast, in a case where the combiner 3 and the correction optical element 4a or 4b overlap each other on a line of sight, as illustrated in Fig. 6(A), the dark field-of-view area A1 is formed. In a case where a field of view includes a part where neither the combiner 3 nor the correction optical elements 4a and 4b are present, as illustrated in Fig. 6(B), the bright field-of-view area A2 is formed. Accordingly, in a state where the projections S4a, S4b, and S3 viewed from the observer's eye EY are disposed to not overlap each other and to have no gaps, if the transmittance (or the reflectance) of external light Lb in the combiner 3 is set to be equal to the transmittance (or the reflectance) of external light Lb in the correction optical elements 4a and 4b, the brightness of the external field of view is made uniform, and the outside world is easily viewed.

As is apparent from the optical path illustrated in Fig. 2, in a case where the correction optical element 4b is disposed in the prism 2 that is located below the combiner 3, even if a method for directly sticking or vapor-depositing the correction optical element 4b on the prism 2 or another method is employed, video light La is not affected. However, the prism 1 guides the video light La due to total reflection inside the prism 1. Therefore, if the correction optical element 4a is disposed to be in direct contact with a prism surface, there is a possibility that the video light La will be distorted. Accordingly, in a case where the correction optical element 4a is disposed in the prism 1 that is located above the combiner 3, it is preferable that the correction optical element 4a be disposed to be spaced apart from the prism 1 without being directly stuck on the prism 1. In order to dispose the correction optical element 4a to be spaced apart from the prism 1, it is preferable, for example, that beads having a diameter of about 1 mm be stuck on a part that is not used to totally reflect the video light La in the prism 1, the beads be sandwiched between the correction optical element 4a and the prism 1, and the correction optical element 4a be stuck with an adhesive.

Next, a video display device X1 in a case where both the combiner 3 and the correction optical elements 4a and 4b are hologram optical elements is used as Example 2, and correction of brightness using the correction optical elements 4a and 4b is described. In the video display device X1 in Example 2, similarly to Example 1, the entire field of view A0 is covered with a combination of areas that are covered with the combiner 3 and the correction optical elements 4a and 4b in such a way that the areas do not overlap each other and do not have any gaps, as illustrated in Fig. 1. Thus, if the correction optical element 4a that is provided on a prism surface on a side of the outside world of the prism 1 and the correction optical element 4b that is provided on a prism surface on a side of the observer's eye EY of the prism 2 are configured by a hologram optical element to have a transmittance or reflectance that is similar to a transmittance or reflectance of the combiner 3, the brightness of the outside world can be made uniform in a field of view viewed through the combiner 3 and a field of view viewed through the correction optical element 4a or the correction optical element 4b rather than the combiner 3. Accordingly, the non-uniformity of an external field of view due to the combiner 3 can be reduced.

As conditions for considering brightness to be uniform, hologram optical elements are provided as the correction optical elements 4a and 4b in such a way that Conditional Expression (1) described above is satisfied, similarly to Example 1. It is preferable that Conditional Expression (1a) be satisfied, and it is more preferable that Conditional Expression (1b) be satisfied. In addition, a concept of the disposition of the correction optical elements 4a and 4b is similar to a concept in Example 1.

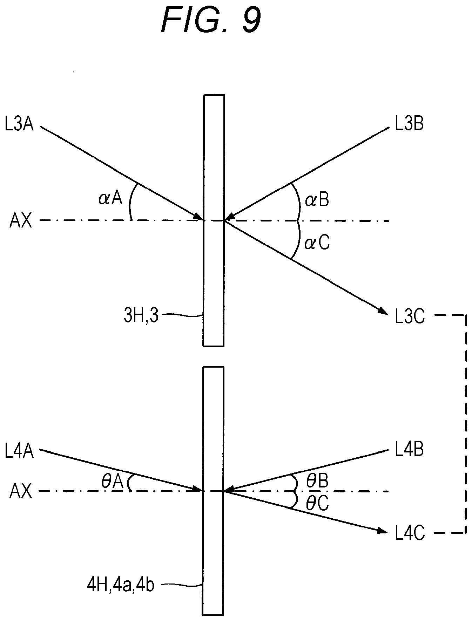

As described above (Fig. 5), it is assumed that an incident angle $\alpha$ at which external light Lb enters the combiner 3 is 30 degrees and an incident angle $\theta$ at which the external light Lb enters the correction optical elements 4a and 4b is 10 degrees. A hologram optical element that has, at an incident angle of 10 degrees, a characteristic that roughly matches a transmission characteristic of the combiner 3 at an incident angle of 30 degrees is used as the correction optical elements 4a and 4b. As illustrated in Fig. 9, for example, hologram exposure at the time of manufacturing the combiner 3 is performed in such a way that object light L3A and reference light L3B are caused to enter a hologram photosensitive material 3H at angles $\alpha A$ and $\alpha B$ of 30 degrees and reproduced light L3C is reflected at $\alpha C$ of 30 degrees. In addition, hologram exposure at the time of manufacturing the correction optical elements 4a and 4b is performed in such a way that object light L4A and reference light L4B are caused to enter a hologram photosensitive material 4H at angles $\theta A$ and $\theta B$ of 10 degrees and reproduced light L4C is reflected at $\theta C$ of 10 degrees. Then, a hologram optical element that has, at an incident angle $\theta A$ of 10 degrees, a characteristic that roughly matches a transmission characteristic of the combiner 3 at an incident angle $\alpha A$ of 30 degrees (stated another way, a transmission characteristic of the reproduced light L3C roughly matches a transmission characteristic of the reproduced light L4C) is used as the correction optical elements 4a and 4b. At this time, a wavelength of a laser beam to be used in exposure is set to be the same as a wavelength to be used in the combiner 3, and this enables the hologram optical element to have a roughly similar transmission characteristic.

Note that, in Example 2, a notch filter that reflects a specified wavelength, instead of the hologram optical element, may be used as the correction optical elements 4a and 4b. Desired optical performance can be achieved similarly by using a notch filter. Therefore, it is sufficient if a notch filter is selected that can cut, at an incident angle of 10 degrees, a wavelength that is roughly similar to a wavelength that the hologram optical element serving as the combiner 3 can cut at an incident angle of 30 degrees.

Next, a video display device X1 in a case where both the combiner 3 and the correction optical elements 4a and 4b are hologram optical elements is used as Example 3, and correction of hue using the correction optical elements 4a and 4b is described. In the video display device X1 in Example 3, similarly to Example 2, the entire field of view A0 is covered with a combination of areas that are covered with the combiner 3 and the correction optical elements 4a and 4b in such a way that the areas do not overlap each other and do not have any gaps, as illustrated in Fig. 1. Thus, if the correction optical element 4a that is provided on a prism surface on a side of the outside world of the prism 1 and the correction optical element 4b that is provided on a prism surface on a side of the observer's eye EY of the prism 2 are configured by a hologram optical element to have a transmittance or reflectance that is similar to a transmittance or reflectance of the combiner 3, the hue of the outside world can be made uniform in a field of view viewed through the combiner 3 and a field of view viewed through the correction optical element 4a or the correction optical element 4b rather than the combiner 3. Accordingly, the non-uniformity of an external field of view due to the combiner 3 can be reduced. Note that the hologram optical element can be generated by using a method that is similar to a method in Example 2.

As conditions for considering hue to be uniform, rays of light L1 and L2 that are similar to the rays of light L1 and L2 in Example 1 are considered. Then, the correction optical element 4a and 4b are disposed in such a way that Conditional Expression (2) described below is satisfied:

$$\Delta E \leq 6.5 \ ... \ (2)$$

where

$\Delta E$ is a color difference between a ray of light that passes through a prism and a combiner without passing through a correction optical element in external light that perpendicularly enters a prism surface and a ray of light that passes through a prism and a correction optical element without passing through the combiner in external light that obliquely enters a prism surface.

Relating to Conditional Expression (2) described above, it is desirable that Conditional Expression (2a) described below be satisfied, and it is further desirable that Conditional Expression (2b) be satisfied:

$$\Delta E \leq 3.2 \ ... \ (2a)$$

$$\Delta E \leq 1.6 \ ... \ (2b)$$

Conditional Expressions (2a) and (2b) described above specify condition ranges that are suitable to consider the hue of the outside world to be uniform, within a condition range specified by Conditional Expression (2) described above. Note that, regarding the ranges specified by Conditional Expression (2) described above, and the like, $\Delta E$ ranging from 3.2 to 6.5 indicates a range that can be considered to have the same color at an impression level, $\Delta E$ ranging from 1.6 to 3.2 indicates a level at which a color difference is hardly noticeable in color separated comparison, and $\Delta E$ ranging from 0.8 to 1.6 indicates a level at which a color difference is slightly noticeable in color adjacent comparison.

The color difference $\Delta E$ is calculated as described below. First, in a color space L*u*v*, a stimulus value XI, Y1, Z1 with respect to the ray of light L1 and a stimulus value X2, Y2, Z2 with respect to the rays of light L2 are calculated by using Formulae (C1), (C2), and (C3) described below:
[Formula 2]

$$X = K \int_{380}^{780} P(\lambda)\rho(\lambda)x(\lambda)d\lambda \quad ...(C1)$$

$$Y = K \int_{380}^{780} P(\lambda)\rho(\lambda)y(\lambda)d\lambda \quad ...(C2)$$

$$Z = K \int_{380}^{780} P(\lambda)\rho(\lambda)z(\lambda)d\lambda \quad ...(C3)$$

In these formulae,

$P(\lambda)$ is a spectrum of light that enters a hologram optical element,
$\rho(\lambda)$ is a transmission spectrum of a hologram optical element,
$x(\lambda)$ is a color-matching function of x,

y($\lambda$) is a color-matching function of y, and

z($\lambda$) is a color-matching function of z.

Obtained XI, Y1, Z1; X2, Y2, Z2 is applied to Formulae (C4) and (C5) described below, and u'1, v'1; u'2, v'2 is calculated. A calculation result is applied to Formulae (C6), (C7), and (C8) described below, and L1*, u1*, v1*; L2*, u2*, v2* is calculated. Further, a calculation result is applied to Formula (C9) described below, and the color difference $\Delta$E is calculated.

$$u' = 4X/(X + 15Y + 3Z) \ ... \ (C4)$$

$$v' = 9Y/(X + 15Y + 3Z) \ ... \ (C5)$$

$$L* = 116(Y/Yn)^{(1/3)} - 16 \ ... \ (C6)$$

$$u* = 13L*(u' - u'n) \ ... \ (C7)$$

$$v* = 13L*(v' - v'n) \ ... \ (C8)$$

$$\Delta E = \sqrt{\{(\Delta L*)^2 + (\Delta u*)^2 + (\Delta v*)^2\}} \ ... \ (C9)$$

where

L* is a brightness index,
u* is a coordinate of L*u*v*,
v* is a coordinate of L*u*v*,
Yn is Y of a perfect diffusion reflection plane (a reference white plane),
u'n is u' of a perfect diffusion reflection plane (a reference white plane),
v'n is v' of a perfect diffusion reflection plane (a reference white plane),

$$\Delta L* = |L1* - L2*|,$$

$$\Delta u* = |u1* - u2*|,$$

and

$$\Delta v* = |v1* - v2*|.$$

Note that, in Example 3, a notch filter that reflects a specified wavelength, instead of the hologram optical element, may be used as the correction optical elements 4a and 4b. Desired optical performance can be achieved similarly by using a notch filter. Therefore, it is sufficient if a notch filter is selected that can cut, at an incident angle of 10 degrees, a wavelength that is roughly similar to a wavelength that the hologram optical element serving as the combiner 3 can cut at an incident angle of 30 degrees. In addition, a concept of the disposition of the correction optical elements 4a and 4b is similar to a concept in Example 1.

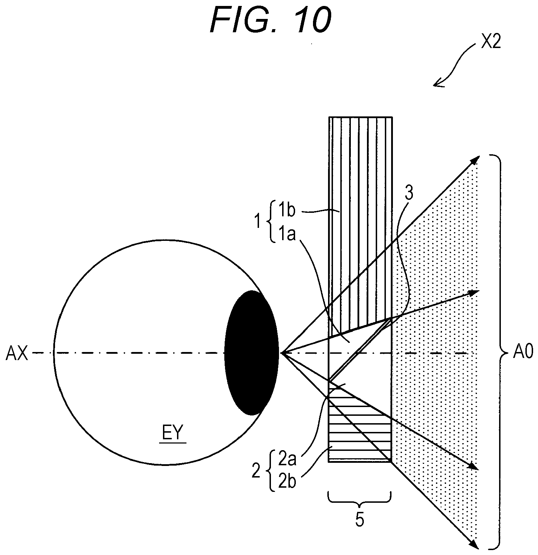

Next, a video display device X2 is described in which the correction optical elements 4a and 4b described above have been integrated as parts of the prisms 1 and 2 in the optical device 5. Fig. 10 illustrates a schematic configuration of the video display device X2 that includes light absorption prisms 1b and 2b as a correction optical element, in a longitudinal sectional view. This video display device X2 is an optical see-through type video display device that projects and displays a video of a display element 6 on an observer's eye EY in such a way that the video is superimposed onto an outside view, similarly to the video display device X1 described above. The video display device X2 includes an optical device 5 and the display element 6.

The optical device 5 includes the prisms 1 and 2 that support a combiner 3, and the combiner 3 that simultaneously guides, to the observer's eye EY, video light La from the display element 6 and external light Lb from the outside view. The prism 1 is a cemented prism that includes a transparent prism 1a and a light absorption prism 1b, and the prism 2 is a cemented prism that includes a transparent prism 2a and a light absorption prism 2b. The light absorption prisms 1b and 2b are provided as a correction optical element that optically acts on external light Lb (Fig. 2) that is made incident without passing through the combiner 3, similarly to the correction optical elements 4a and 4b described above. In addition, a specific example of the combiner 3 is an optical element such as a half mirror (a film-shaped half mirror, a thin film-shaped half mirror, or the like), a hologram optical element (a reflection-type hologram of a volume phase type, or the like), similarly to the video display device X1.

The transparent prisms 1a and 2a are transparent optical members that each include a transparent material such as plastic (acrylic resin, polycarbonate, cycloolefin resin, or the like). In addition, the light absorption prisms 1b and 2b are optical members in which a light absorptivity has been increased, for example, by mixing an additive to a transparent material that is similar to a material of the transparent prisms 1a and 2a. As a method for molding the transparent prisms 1a and 2a and the light absorption prisms 1b and 2b, a method for performing cementing after individual molding is preferable.

Next, a video display device X2 in a case where the light absorption prisms 1b and 2b are used as a correction optical element and the combiner 3 is a half mirror is used as Example 4, and correction of brightness using the light absorption prisms 1b and 2b is described. In the video display device X2 in Example 4, similarly to Example 1, the entire field of view A0 is covered with a combination of areas that are covered with the combiner 3 and the light absorption prisms 1b and 2b in such a way that the areas do not overlap each other and do not have any gaps, as illustrated in Fig. 10. Therefore, if the light absorption prisms 1b and 2b are configured to have a transmittance or a reflectance that is similar to a transmittance or a reflectance of the combiner 3, the brightness of the outside world can be made uniform in a field of view viewed through the combiner 3 and a field of view viewed through the light absorption prism 1b or the light absorption prism 2b rather than the combiner 3. Accordingly, the non-uniformity of an external field of view due to the combiner 3 can be reduced.

As conditions (selection of the type, amount, or the like of an additive to be used in the light absorption prisms 1b and 2b) for considering brightness to be uniform, rays of light that are similar to rays of light in Example 1 are considered, and the light absorption prisms 1b and 2b are provided in such a way that Conditional Expression (1) described above is satisfied. It is preferable that Conditional Expression (1a) be satisfied, and it is more preferable that Conditional Expression (1b) be satisfied.

Next, a video display device X2 in a case where the light absorption prisms 1b and 2b are used as a correction optical element and the combiner 3 is a hologram optical element is used as Example 5, and correction of brightness using the light absorption prisms 1b and 2b is described. In the video display device X2 in Example 5, similarly to Example 4, the entire field of view A0 is covered with a combination of areas that are covered with the combiner 3 and the light absorption prisms 1b and 2b in such a way that the areas do not overlap each other and do not have any gaps, as illustrated in Fig. 10. Therefore, if the light absorption prisms 1b and 2b are configured to have a transmittance or a reflectance that is similar to a transmittance or a reflectance of the combiner 3, the brightness of the outside world can be made uniform in a field of view viewed through the combiner 3 and a field of view viewed through the light absorption prism 1b or the light absorption prism 2b rather than the combiner 3. Accordingly, the non-uniformity of an external field of view due to the combiner 3 can be reduced.

As conditions (selection of the type, amount, or the like of an additive to be used in the light absorption prisms 1b and 2b) for considering brightness to be uniform, rays of light that are similar to rays of light in Example 1 are considered, and the light absorption prisms 1b and 2b are provided in such a way that Conditional Expression (1) described above is satisfied. It is preferable that Conditional Expression (1a) be satisfied, and it is more preferable that Conditional Expression (1b) be satisfied.

Next, a video display device X2 in a case where the light absorption prisms 1b and 2b are used as a correction optical element and the combiner 3 is a hologram optical element is used as Example 6, and correction of hue using the light absorption prisms 1b and 2b is described. In the video display device X2 in Example 6, similarly to Example 5, the entire field of view A0 is covered with a combination of areas that are covered with the combiner 3 and the light absorption prisms 1b and 2b in such a way that the areas do not overlap each other and do not have any gaps, as illustrated in Fig. 10. Therefore, if the light absorption prisms 1b and 2b are configured to have a transmittance or a reflectance that is similar to a transmittance or a reflectance of the combiner 3, the hue of the outside world can be made uniform in a field of view viewed through the combiner 3 and a field of view viewed through the light absorption prism 1b or the light absorption prism 2b rather than the combiner 3. Accordingly, the non-uniformity of an external field of view due to the combiner 3 can be reduced.

As conditions (selection of the type, amount, or the like of an additive to be used in the light absorption prisms 1b and 2b) for considering hue to be uniform, rays of light that are similar to rays of light in Example 1 are considered, and the light absorption prisms 1b and 2b are provided in such a way that Conditional Expression (2) described above is satisfied. It is preferable that Conditional Expression (2a) be satisfied, and it is more preferable that Conditional Expression (2b) be satisfied.

In Examples 1 to 6 described above, the brightness or hue of an external field of view is corrected, as indicated in Table 1 described below, and therefore a field-of-view part viewed through the combiner 3 and the other field-of-view part are caused to look similar. However, even if the brightness of the external field of view is made uniform, as in Examples 2 and 5, by using a hologram optical element or a light absorption prism, hue is not made uniform; however, if the hue of the external field of view is made uniform, as in Examples 3 and 6, brightness can also be made uniform.

[Table 1]

|  | Combiner | Correction optical element | Correction | Video display device |
|---|---|---|---|---|
| Example 1 | Half mirror | Half mirror | Brightness | X1 |
| Example 2 | Hologram optical element | Hologram optical element | Brightness | X1 |
| Example 3 | Hologram optical element | Hologram optical element | Hue | X1 |
| Example 4 | Half mirror | Light absorption prism | Brightness | X2 |
| Example 5 | Hologram optical element | Light absorption prism | Brightness | X2 |
| Example 6 | Hologram optical element | Light absorption prism | Hue | X2 |

By employing the video display device X1 or X2 described above, an external field of view viewed through the combiner 3 and the other field of view have a small difference in brightness or color, and therefore the non-uniformity of an external field of view due to the combiner 3 can be reduced. For example, when an outside world is observed through the head-mounted display 10, the non-uniformity of the brightness or color of an external field of view is reduced, and an effect is exhibited by which a difficulty in viewing the outside world is reduced.

As is apparent from the description above, the embodiments or examples described above include the characteristic configurations (#1) to (#9) described below.

(#1): A video display device of an optical see-through type that projects and displays a video on an observer's eye in a state where the video has been superimposed onto an outside view, the video display device including:

a display element that displays the video;
a combiner that simultaneously guides, to the observer's eye, video light from the display element and external light from the outside view;
a prism that supports the combiner; and
a correction optical element that is disposed to satisfy Conditional Expression (1) described below:

$$(\Delta Y/Y1) \times 100 \leq 25\% ... (1),$$

where

$\Delta Y$ is an absolute value of a difference between Y1 and Y2,

$$\Delta Y = |Y1 - Y2|,$$

Y1 is a stimulus value of a ray of light that passes through the prism and the combiner without passing through the correction optical element in the external light that perpendicularly enters a prism surface, and
Y2 is a stimulus value of a ray of light that passes through the prism and the correction optical element without passing through the combiner in the external light that obliquely enters the prism surface.

(#2): The video display device described in (#1), in which the correction optical element is disposed to satisfy Conditional Expression (1a) described below:

$$(\Delta Y / Y1) \times 100 \leq 15\% \dots (1a),$$

where

ΔY is the absolute value of the difference between Y1 and Y2,

$$\Delta Y = |Y1 - Y2|,$$

Y1 is the stimulus value of the ray of light that passes through the prism and the combiner without passing through the correction optical element in the external light that perpendicularly enters the prism surface, and
Y2 is the stimulus value of the ray of light that passes through the prism and the correction optical element without passing through the combiner in the external light that obliquely enters the prism surface.

(#3): The video display device described in (#1), in which
the correction optical element is disposed to satisfy Conditional Expression (1b) described below:

$$(\Delta Y / Y1) \times 100 \leq 5\% \dots (1b),$$

where

ΔY is the absolute value of the difference between Y1 and Y2,

$$\Delta Y = |Y1 - Y2|,$$

Y1 is the stimulus value of the ray of light that passes through the prism and the combiner without passing through the correction optical element in the external light that perpendicularly enters the prism surface, and
Y2 is the stimulus value of the ray of light that passes through the prism and the correction optical element without passing through the combiner in the external light that obliquely enters the prism surface.

(#4): A video display device of an optical see-through type that projects and displays a video on an observer's eye in a state where the video has been superimposed onto an outside view, the video display device including:

a display element that displays the video;
a combiner that simultaneously guides, to the observer's eye, video light from the display element and external light from the outside view;
a prism that supports the combiner; and
a correction optical element that is disposed to satisfy Conditional Expression (2) described below:

$$\Delta E \leq 6.5 \dots (2),$$

where
ΔE is a color difference between a ray of light that passes through the prism and the combiner without passing through the correction optical element in the external light that perpendicularly enters a prism surface, and a ray of light that passes through the prism and the correction optical element without passing through the combiner in the external light that obliquely enters the prism surface.

(#5): The video display device described in (#4), in which
the correction optical element is disposed to satisfy Conditional Expression (2a) described below:

$$\Delta E \leq 3.2 \dots (2a),$$

where

ΔE is the color difference between the ray of light that passes through the prism and the combiner without passing through the correction optical element in the external light that perpendicularly enters the prism surface, and the ray of light that passes through the prism and the correction optical element without passing through the combiner in the external light that obliquely enters the prism surface.

(#6): The video display device described in (#4), in which the correction optical element is disposed to satisfy Conditional Expression (2b) described below:

$$\Delta E \le 1.6 \ ... \ (2b),$$

where

ΔE is the color difference between the ray of light that passes through the prism and the combiner without passing through the correction optical element in the external light that perpendicularly enters the prism surface, and the ray of light that passes through the prism and the correction optical element without passing through the combiner in the external light that obliquely enters the prism surface.

(#7): A video display device of an optical see-through type that projects and displays a video on an observer's eye in a state where the video has been superimposed onto an outside view, the video display device including:

a display element that displays the video;
a combiner that simultaneously guides, to the observer's eye, video light from the display element and external light from the outside view;
a prism that supports the combiner; and
a correction optical element that is disposed in a state where a projection viewed from the observer's eye of the correction optical element and a projection of the combiner do not overlap each other and do not have a gap, in which a transmittance of the external light in the combiner is equal to a transmittance of the external light in the correction optical element.

(#8): An optical see-through display that is mounted with the video display device described in any one of (#1) to (#7), in which the video is projected and displayed on the observer's eye in a see-through manner by using the combiner.

(#9): The optical see-through display described in (#8), further including:

a support member that supports the video display device in a state where the combiner is located in front of the observer's eye.

Reference Signs List

| X0, XI, X2 | Video display device |
| 1, 2 | Prism |
| 1a, 2a | Transparent prism |
| 1b, 2b | Light absorption prism (correction optical element) |
| 3 | Combiner (half mirror, hologram optical element) |
| 4a, 4b | Correction optical element (half mirror, hologram optical element) |
| 3H, 4H | Hologram photosensitive material |
| 5 | Optical device |
| 6 | Display element |
| 10 | Head-mounted display (optical see-through display) |
| 11 | Frame (support member) |
| 12a, 12b | Lens |
| 13 | Housing |
| A0 | Entire field of view |
| A1 | Dark field-of-view area |
| A2 | Bright field-of-view area |
| L1, L2 | Ray of light |
| La | Video light |

| Lb | External light |
| L3A, L4A | Object light |
| L3B, L4B | Reference light |
| L3C, L4C | Reproduced light |
| S0 | Projection plane |
| S3 | Projection of combiner |
| S4a, S4b | Projection of correction optical element |
| EY | Observer's eye |

**Claims**

1. A video display device of an optical see-through type that projects and displays a video on an observer's eye in a state where the video has been superimposed onto an outside view, the video display device comprising:

   a display element that displays the video;
   a combiner that simultaneously guides, to the observer's eye, video light from the display element and external light from the outside view;
   a prism that supports the combiner; and
   a correction optical element that is disposed to satisfy Conditional Expression (1) described below:

$$(\Delta Y/Y1) \times 100 \le 25\% \ldots (1),$$

   where

   $\Delta Y$ is an absolute value of a difference between Y1 and Y2,

$$\Delta Y = |Y1 - Y2|,$$

   Y1 is a stimulus value of a ray of light that passes through the prism and the combiner without passing through the correction optical element in the external light that perpendicularly enters a prism surface, and Y2 is a stimulus value of a ray of light that passes through the prism and the correction optical element without passing through the combiner in the external light that obliquely enters the prism surface.

2. The video display device according to claim 1, wherein the correction optical element is disposed to satisfy Conditional Expression (1a) described below:

$$(\Delta Y/Y1) \times 100 \le 15\% \ldots (1a),$$

   where

   $\Delta Y$ is the absolute value of the difference between Y1 and Y2,

$$\Delta Y = |Y1 - Y2|,$$

   Y1 is the stimulus value of the ray of light that passes through the prism and the combiner without passing through the correction optical element in the external light that perpendicularly enters the prism surface, and Y2 is the stimulus value of the ray of light that passes through the prism and the correction optical element without passing through the combiner in the external light that obliquely enters the prism surface.

3. The video display device according to claim 1, wherein the correction optical element is disposed to satisfy Conditional Expression (1b) described below:

$$(\Delta Y / Y1) \times 100 \le 5\% \ ... \ (1b),$$

where

$\Delta Y$ is the absolute value of the difference between Y1 and Y2,

$$\Delta Y = |Y1 - Y2|,$$

Y1 is the stimulus value of the ray of light that passes through the prism and the combiner without passing through the correction optical element in the external light that perpendicularly enters the prism surface, and Y2 is the stimulus value of the ray of light that passes through the prism and the correction optical element without passing through the combiner in the external light that obliquely enters the prism surface.

4. A video display device of an optical see-through type that projects and displays a video on an observer's eye in a state where the video has been superimposed onto an outside view, the video display device comprising:

a display element that displays the video;
a combiner that simultaneously guides, to the observer's eye, video light from the display element and external light from the outside view;
a prism that supports the combiner; and
a correction optical element that is disposed to satisfy Conditional Expression (2) described below:

$$\Delta E \le 6.5 \ ... \ (2),$$

where
$\Delta E$ is a color difference between a ray of light that passes through the prism and the combiner without passing through the correction optical element in the external light that perpendicularly enters a prism surface, and a ray of light that passes through the prism and the correction optical element without passing through the combiner in the external light that obliquely enters the prism surface.

5. The video display device according to claim 4, wherein
the correction optical element is disposed to satisfy Conditional Expression (2a) described below:

$$\Delta E \le 3.2 \ ... \ (2a),$$

where
$\Delta E$ is the color difference between the ray of light that passes through the prism and the combiner without passing through the correction optical element in the external light that perpendicularly enters the prism surface, and the ray of light that passes through the prism and the correction optical element without passing through the combiner in the external light that obliquely enters the prism surface.

6. The video display device according to claim 4, wherein
the correction optical element is disposed to satisfy Conditional Expression (2b) described below:

$$\Delta E \le 1.6 \ ... \ (2b),$$

where
$\Delta E$ is the color difference between the ray of light that passes through the prism and the combiner without passing through the correction optical element in the external light that perpendicularly enters the prism surface, and the ray of light that passes through the prism and the correction optical element without passing through the combiner in the external light that obliquely enters the prism surface.

7. A video display device of an optical see-through type that projects and displays a video on an observer's eye in a state where the video has been superimposed onto an outside view, the video display device comprising:

a display element that displays the video;
a combiner that simultaneously guides, to the observer's eye, video light from the display element and external light from the outside view;
a prism that supports the combiner; and
a correction optical element that is disposed in a state where a projection viewed from the observer's eye of the correction optical element and a projection of the combiner do not overlap each other and do not have a gap, wherein
a transmittance of the external light in the combiner is equal to a transmittance of the external light in the correction optical element.

8. An optical see-through display that is mounted with the video display device according to any one of claims 1 to 7, wherein
the video is projected and displayed on the observer's eye in a see-through manner by using the combiner.

9. The optical see-through display according to claim 8, further comprising:
a support member that supports the video display device in a state where the combiner is located in front of the observer's eye.

# FIG. 1

(A)

(B)

# FIG. 2

# FIG. 3

## FIG. 4

## FIG. 5

# FIG. 6

(A)

(B)

EP 3 699 672 A1

# FIG. 7

(A)

(B)

(C)

(D)

22

# FIG. 8

## FIG. 9

# FIG. 10

# FIG. 11

(A)

(B)

## INTERNATIONAL SEARCH REPORT

| International application No. |
| --- |
| PCT/JP2018/036485 |

**A. CLASSIFICATION OF SUBJECT MATTER**
Int. Cl. G02B27/02(2006.01)i, G02B5/04(2006.01)i

According to International Patent Classification (IPC) or to both national classification and IPC

**B. FIELDS SEARCHED**

Minimum documentation searched (classification system followed by classification symbols)
Int. Cl. G02B27/01, G02B27/02, G02B5/04, G02B5/32, B60K35/00, H04N5/64, G09F9/00

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2010/061835 A1 (KONICA MINOLTA OPTO, INC.) 03 | 7-9 |
| A | June 2010, paragraphs [0023]-[0096], fig. 1, 2, 7-13 & US 2011/0194163 A1, paragraphs [0036]-[0115], fig. 1, 2, 7-13 | 1-6 |
| Y | JP 2011-203508 A (PANASONIC CORP.) 13 October | 7-9 |
| A | 2011, paragraphs [0006], [0016] (Family: none) | 1-6 |
| Y | JP 06-018811 A (RICOH CO., LTD.) 28 January 1994, | 7-9 |
| A | paragraphs [0023], [0024] (Family: none) | 1-6 |
| Y | JP 2000-321962 A (VICTOR COMPANY OF JAPAN, LTD.) | 7-9 |
| A | 24 November 2000, paragraph [0043] (Family: none) | 1-6 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15.10.2018 | 23.10.2018 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
| --- |
| PCT/JP2018/036485 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2017-120311 A (HITACHI-LG DATA STORAGE INC.) 06 July 2017, paragraphs [0082]-[0089], fig. 14, 15 (Family: none) | 1-9 |
| A | JP 2004-341027 A (MINOLTA CO., LTD.) 02 December 2004, paragraphs [0042]-[0051], fig. 7 (Family: none) | 1-9 |
| A | US 2015/0146301 A1 (GOGGLE INC.) 28 May 2015, entire text, all drawings & US 8970571 B1 | 1-9 |

Form PCT/ISA/210 (continuation of second sheet) (January 2015)

**EP 3 699 672 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017097098 A
- JP 2013214856 A
- JP 2008046562 A